# EUROPEAN PATENT SPECIFICATION

(11) **EP 3 164 096 B1**
(45) Date of publication and mention of the grant of the patent: **06.11.2019**
(21) Application number: 15814848.6
(22) Date of filing: 29.06.2015
(51) Int. Cl.: A61C 7/14, A61C 7/24, A61C 7/28, A61C 7/16

(54) **MOLAR APPLIANCE FOR AN ORTHODONTIC BRACE**
BACKENZAHNEINRICHTUNG FÜR EINE ORTHODONTISCHE KLAMMER
DISPOSITIF POUR MOLAIRE POUR UN APPAREIL ORTHODONTIQUE

(30) Priority: 02.07.2014 US 201462020260 P
(43) Date of publication of application: 10.05.2017
(73) Proprietor: 3M Innovative Properties Company, St. Paul, MN 55133-3427 (US)
(72) Inventor: ODA, Todd I., Saint Paul, MN 55133-3427 (US)
(74) Representative: Vossius & Partner Patentanwälte Rechtsanwälte mbB
(86) International application number: PCT/US2015/038353
(87) International publication number: WO 2016/003921

(56) References cited:
- EP-A1- 0 658 335
- CN-U- 201 609 423
- US-A- 3 838 514
- US-A- 3 838 514
- US-A- 5 292 248
- US-A- 5 556 277
- US-A- 5 556 277
- US-A1- 2004 121 279
- US-A1- 2006 046 224
- US-A1- 2006 046 224
- US-A1- 2006 172 248
- US-A1- 2013 309 625
- US-B2- 6 705 862

## Description

### Background

Orthodontic therapy is a specialized area of dentistry concerning the supervised treatment of malpositioned (or crooked) teeth. Generally such treatment involves the judicious application of light continuous forces to the teeth using one or more orthodontic appliances. These forces stimulate changes in surrounding bone structure, thereby gradually directing teeth to their proper locations in the oral cavity. Orthodontic therapy can provide many benefits, including ease of maintaining hygiene, improved facial appearance, as well as improved bite function. Treatment often lasts between two and three years, depending on the complexity of the case.

Fixed appliances, or "braces," represent one type of orthodontic treatment in which tiny slotted appliances, called brackets, are attached to the teeth. A resilient, U-shaped archwire is then placed into the slots of the brackets. When ligated to the brackets, the archwire acts as a track that guides teeth toward their proper locations during the course of treatment. In the beginning of treatment, the archwire tends to have small cross-sectional dimensions to facilitate ligation and also keep forces imparted to the teeth relatively low as the teeth unravel. In later stages of treatment, the teeth approach their target positions, allowing for progressively larger (and stiffer) wires to be used to improve the practitioner's control over the associated teeth.

The ends of the archwire are generally captured in tube-shaped molar appliances commonly called buccal tubes, which are affixed to the patient's molar teeth. Buccal tubes typically feature an enclosed passage extending in a mesial-distal direction. The enclosed passage helps prevent the end of the archwire from contacting the patient's soft tissue in the oral cavity, which might otherwise lead to pain and injury. In some instances, buccal tubes are provided with a convertible cap along one side of the passage that can be opened in order to convert the tube into a bracket when desired.

While the archwire is initially distorted when ligated to the brackets, it gradually returns toward its original shape, functioning as a track that guides movement of teeth toward desired positions. The brackets, tubes, and archwire are collectively known as "braces."

US 2013/0309625 discloses an orthodontic bracket having three archwire retention channels in the mesial-distal directions, a central channel and two side channels. The two side channels each include a pair of spaced apart inverted archwire retaining regions having a recess that opens generally towards the bracket base. Each such recess is for grasping or holding an archwire therein US 5,556,277 A1 discloses a flared buccal tube having an internally tapered mesial section.

### Summary

Issues related to conventional buccal tubes and molar appliances include: an insufficient fit between the bonding base and the molar tooth surface; an enhanced difficulty of threading an archwire (particularly a larger wire at the conclusion of treatment) through an enclosed archwire passage; and a tendency of the appliance to tip or rotate as pressure is applied during bonding.

The present disclosure provides molar appliances particularly designed to address the issues outlined above, giving a treating practitioner greater confidence in the installation and orientation of the molar appliances during treatment. The molar appliances of the present disclosure feature a tooth bonding base including compound curvature in the mesial-distal direction, providing for a closer fit relative to the buccal surface contour. The appliances feature a funneled entry to the archwire passage that includes a plurality of surfaces with convex curvature. The curved surfaces guide the end of archwire into the slot, while minimizing or avoiding abrupt transition areas that can impede insertion. Moreover, the appliances of the present disclosure can include a buccal surface on the appliance body that is substantially parallel to the torque plane. Aligning the buccal surface to the torque plane reduces the chance of rotation on application of pressure used to bond the appliance to the molar tooth surface.

In one aspect, the present disclosure provides an orthodontic appliance according to claim 1.

The terms "comprises" and variations thereof do not have a limiting meaning where these terms appear in the description and claims. Such terms will be understood to imply the inclusion of a stated step or element or group of steps or elements but not the exclusion of any other step or element or group of steps or elements. By "consisting of' is meant including, and limited to, whatever follows the phrase "consisting of." Thus, the phrase "consisting of' indicates that the listed elements are required or mandatory, and that no other elements may be present. By "consisting essentially of" is meant including any elements listed after the phrase, and limited to other elements that do not interfere with or contribute to the activity or action specified in the disclosure for the listed elements. Thus, the phrase "consisting essentially of" indicates that the listed elements are required or mandatory, but that other elements are optional and may or may not be present depending upon whether or not they materially affect the activity or action of the listed elements.

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the disclosure.

In this application, terms such as "a", "an", and "the" are not intended to refer to only a singular entity, but include the general class of which a specific example may be used for illustration. The terms "a", "an", and "the" are used interchangeably with the term "at least one." The phrases "at least one of' and "comprises at least one of' followed by a list refers to any one of the items in the list and any combination of two or more items in the list.

As used herein, the term "or" is generally employed in its usual sense including "and/or" unless the content clearly dictates otherwise.
The term "and/or" means one or all of the listed elements or a combination of any two or more of the listed elements.

Also herein, all numbers are assumed to be modified by the term "about" and preferably by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used.
Also herein, the recitations of numerical ranges by endpoints include all numbers subsumed within that range as well as the endpoints (e.g., 1 to 5 includes 1, 1.5, 2, 2.75, 3, 3.80, 4, 5, etc.).

As used herein as a modifier to a property or attribute, the term "generally", unless otherwise specifically defined, means that the property or attribute would be readily recognizable by a person of ordinary skill but without requiring absolute precision or a perfect match (e.g., within +/- 20 % for quantifiable properties). The term "substantially", unless otherwise specifically defined, means to a high degree of approximation (e.g., within +/- 10% for quantifiable properties) but again without requiring absolute precision or a perfect match. Terms such as same, equal, uniform, constant, strictly, and the like, are understood to be within the usual tolerances or measuring error applicable to the particular circumstance rather than requiring absolute precision or a perfect match.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Brief Description of the Drawings

Fig. 1 is a front elevational view showing the upper teeth of an exemplary patient undergoing orthodontic treatment, wherein orthodontic appliances are fixed to the teeth and an archwire has been connected to the appliances;
Fig. 2 is a bottom or occlusal view of the teeth, appliances and archwire illustrated in Fig. 1;
Fig. 3 is an enlarged perspective view of one of the appliances that is connected to at least one of the molar teeth shown in Figs. 1 and 2, looking at the appliance in a direction toward its mesial, buccal and occlusal sides;
Fig. 4 is an end elevational view of the appliance shown in Fig. 3, looking at the appliance toward its mesial side;
Fig. 5 is an end elevational view of the appliance shown in Figs. 3 and 4, looking at the appliance toward its distal side;
Fig. 6 is a front elevational view of the appliance shown in Figs. 3-6, looking at the appliance toward its buccal side;
Fig. 7 is a top view of the appliance shown in Figs. 3-7, looking at the appliance toward its gingival side;
Fig. 8 is a cross-sectional view taken across lines 8-8 of Fig. 6;
Fig. 9 is a cross-sectional view taken across lines 9-9 of Fig. 6;
Fig. 10 is a front elevational view of the base of the appliance of Figures 3-9, looking at the base toward its buccal side;
Fig. 11 is a bottom view of the base of Figure 10, looking at its gingival side; and
Fig. 12 is a top view of the base of Figures 10-11, looking at its occlusal side.

While the above-identified figures set forth several embodiments of the disclosure other embodiments are also contemplated, as noted in the description. In all cases, this disclosure presents the invention by way of representation and not limitation. It should be understood that numerous other modifications and embodiments can be devised by those skilled in the art, which fall within the scope of the invention.

### Definitions

"Mesial" means in a direction toward the center of the patient's curved dental arch. "Distal" means in a direction away from the center of the patient's curved dental arch.
"Occlusal" means in a direction toward the outer tips of the patient's teeth.
"Gingival" means in a direction toward the patient's gums or gingiva.
"Buccal" means in a direction toward the patient's cheeks.
"Labial" means in a direction toward the patient's lips.
"Lingual" means in a direction toward the patient's tongue.

### Detailed Description of Illustrative Embodiments

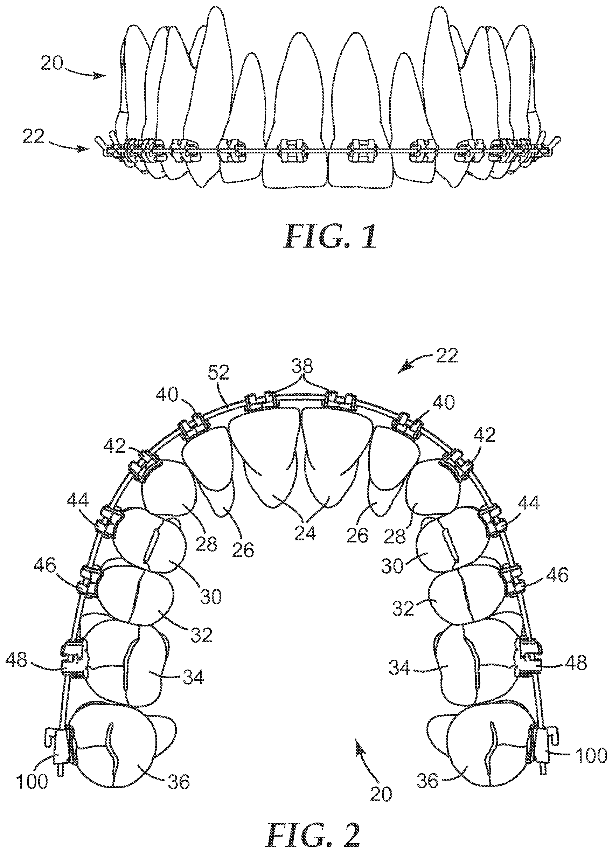

Figure 1 illustrates an example of an upper dental arch 20 of an orthodontic patient that is undergoing orthodontic therapy. An orthodontic brace, broadly designated by the numeral 22, is connected to the teeth of the upper dental arch 20. The brace 22 includes a set of appliances along with an archwire that is received in the appliances, as will be described in more detail below.

Figure 2 is an enlarged view of the upper dental arch 20 along with the brace 22, looking in an upwardly direction toward the outer or occlusal tips of the teeth. The upper dental arch 22 includes a left quadrant and a right quadrant, each of which has a central incisor tooth 24, a lateral incisor tooth 26, a cuspid tooth 28, a first bicuspid tooth 30, and a second bicuspid tooth 32. In addition, each of the left and right quadrants includes a first molar tooth 34 and a second molar tooth 36.

The illustration of the upper dental arch 22 shown in Figures 1 and 2 is only one example of dentition, and many variations are possible. For example, the patient may lack one or more of the illustrated teeth, as may occur in adolescent patients when some of the permanent teeth have not yet erupted. Alternatively, one or more teeth may have been removed prior to orthodontic treatment in order to reduce crowding, especially in instances where the overall size of the dental arch is relatively small.

The upper brace 22 includes a set of appliances that is connected to the teeth of the upper arch 20. In particular, the brace 22 in each of the left and right quadrants includes a central incisor appliance 38 that is coupled to the central incisor tooth 24, a lateral incisor appliance 40 that is connected to the lateral incisor tooth 26, and a cuspid appliance 42 that is connected to the cuspid tooth 28. The brace 22 also includes in each quadrant a first bicuspid appliance 44 that is coupled to the first bicuspid tooth 30, a second bicuspid appliance 46 that is connected to the second bicuspid tooth 32, a first molar appliance 48 that is connected to the first molar tooth 34 and a second molar appliance 100 that is connected to the second molar tooth 36.

The brace 22 further includes an archwire 52 that is made of a resilient material. Suitable materials include, for example, metallic materials such as alloys of nitinol and stainless steel. In plan view, the archwire 52 has an overall, generally "U"-shaped configuration that extends along both of the quadrants.

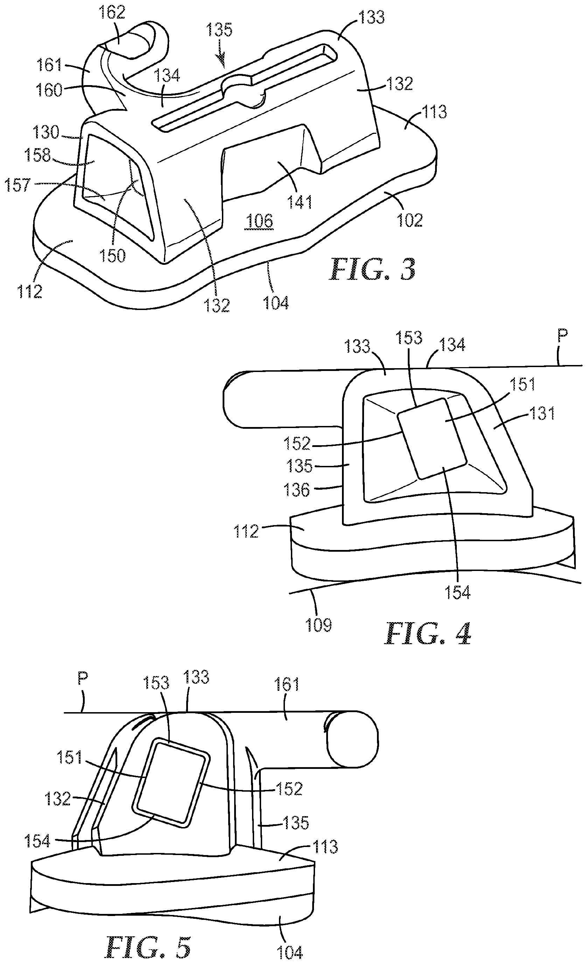

The molar appliance 100 is shown in more detail in Figures 3-9. The appliance 100 has a base 102 with an outer, tooth-facing surface 104 for coupling to the outer enamel surface of a molar tooth. Consequently, the first side 104 of the base 102 in this embodiment can also be deemed a lingual surface and the second side 106 can be deemed a buccal surface. A body 130 extends outwardly from the base 102 in a generally buccal direction and includes an elongated archwire passage 150 extending across and through the body 130 in a generally mesial-distal direction.

The appliance 100 of this embodiment and the orthodontic appliances of other embodiments, unless otherwise indicated, are described herein using a reference frame attached to a labial surface of a tooth on the upper or lower jaw. Consequently, terms such as labial, lingual, buccal, mesial, distal, occlusal, and gingival used to describe the appliance 100 are relative to the chosen reference frame. The embodiments, however, are not limited to the chosen reference frame and descriptive terms, as the appliance 100 may be used on other teeth and in other orientations within the oral cavity. For example, the appliance 100 may also be coupled to the surface of an anterior tooth. Those of ordinary skill in the art will recognize that the descriptive terms used herein may not directly apply when there is a change in reference frame. Nevertheless, the embodiments are intended to be independent of location and orientation within the oral cavity and the relative terms used to describe embodiments of the orthodontic bracket are to merely provide a clear description of the embodiments in the drawings. As such, the relative terms buccal, labial, lingual, mesial, distal, occlusal, and gingival are in no way limiting the embodiments to a particular location or orientation.

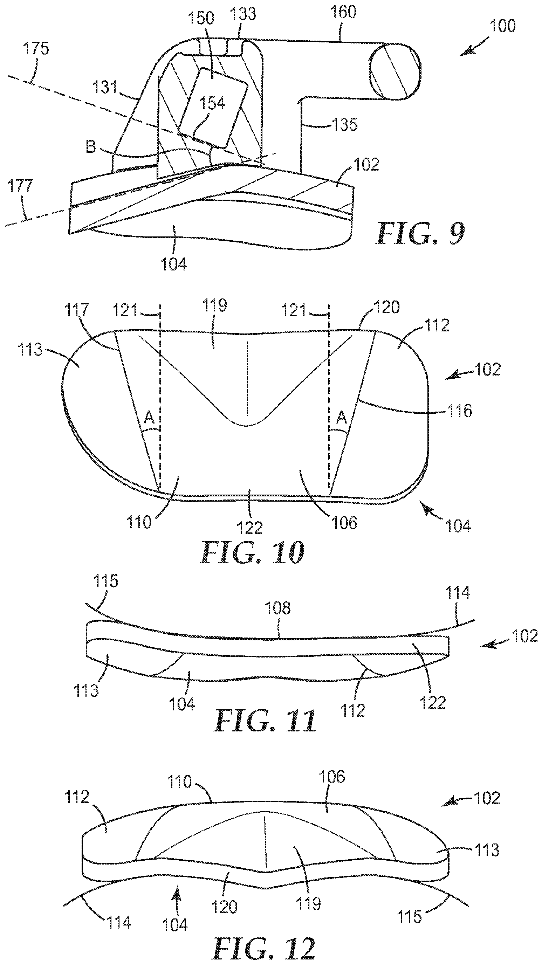

The base 102 typically has a shape that matches or approximates the contour of the tooth surface for which the appliance 100 is intended. In the exemplary embodiment shown in the Figures, the base 102 has a concave, compound contour that is curved in directions adapted to mate with the convex shape of a molar tooth. In other embodiments, the outer, lingual surface 104 may feature the compound contours disclosed herein, with the buccal surface 106 having a substantially different contour. The contour of the base 102 includes a first mesial-distal curve 108. The first mesial-distal curve 108 can be viewed in a reference plane parallel to the occlusal plane of the patient when the appliance 100 is mounted on a tooth, and is depicted in Figure 11. The base 102 also includes an occlusal-gingival curve 109 that can be viewed in a reference plane perpendicular to the occlusal plane and is depicted in Figure 4.

The outer, lingual surface 104 may include mesh, holes, bumps, recesses, undercuts, a microetched surface, glass grit, bonded particles, an organo-silane treated surface, or any other known mechanical or chemical modification to enhance adhesive bonding between the base 102 and the underlying tooth. In other implementations, the base may include a fixed, compressible material to assist in filling gaps between the base 102 and the tooth structure. Suitable compressible materials are described in US Publication No. 2009/0233252 (Cinader).

The base 102 can advantageously include additional, compound curvature in the mesial-distal direction. As best illustrated in Figures 10-12, the base 102 includes wings 112, 113 disposed adjacent the mesial and distal edges of the base 102, as well as a central portion 110 disposed between the mesial wing 112 and the distal wing 113. The wings 112, 113 are rotated relative to the central portion 110 in directions away from the buccal surface 106 of the base 102. Accordingly, each wing 112, 113 introduces an additional mesial-distal curve to the base 102 (particularly lingual surface 104 thereof), with wing 112 incorporating mesial-distal curve 114 and wing 113 incorporating mesial-distal curve 115. The additional mesial-distal curves 114, 115 include a different radius than the first mesial-distal curve 108 of the central portion 110, thereby creating compound curvature in the mesial-distal direction. In alternative embodiments, the base may include one of a mesial or distal wing, and accordingly fewer compound curves.

For the base 102 depicted in Figures 10-12, each of the second and third mesial-distal curves 114, 115 has a smaller radius of curvature than the radius of the first mesial-distal curve 108. This can allow, in certain circumstances, for tighter wrapping of the base 102 about the buccal curvature of the intended molar tooth surface for bonding. In the depicted embodiment, the second and third mesial-distal curves 114, 115 include the same radius of curvature, providing the base 102 with a symmetrical appearance. In other embodiments, the second and third curves 114, 115 may each have a different radius of curvature, creating a base featuring at least three distinct mesial-distal curves. In one exemplary implementation of the present disclosure, the first mesial-distal curve 108 has a radius of 17.15 mm (0.675 inches), with the second and third mesial-distal curves 114, 115 having a radius of 5.1 mm (0.2 inches). Those skilled in the art will appreciate that other dimensions and relationships between the mesial-distal curves are possible and can be tailored to a desired dental contour.

Referring now to Figure 10, the wings 112, 113 are rotated relative to the central portion 110 along lines of compound curvature 116, 117 that are spaced from the center of the base and buccal indent 119. The lines of compound curvature 116, 117 extend across the base 102 in a generally occlusal-gingival direction. Either or both of the lines of compound curvature 116, 117 may be curved about an arc in embodiments of the base 102 featuring an occlusal-gingival curvature. In the depicted embodiment, the lines of compound curvature 116, 117 extend along a reference axes angularly offset from the occlusal-gingival lateral axes 121 of the base 102. The degree of angular offset may be selected to approximate the buccal contour of the first or second molar. In certain embodiments, the offset angle "A" is at least 5 degrees, in other embodiments at least 10 degrees, in other embodiments at least 15 degrees, and in other embodiments at least 20 degrees. In certain embodiments, the offset angle is no greater than 60 degrees, in some embodiments no greater than 50 degrees, in some embodiments no greater than 45 degrees, and in some embodiments no greater than 30 degrees. In presently preferred circumstances, the offset angle A is between 10 and 30 degrees.

When extending at offset angle "A", the lines of compound contour 116, 117 give the central portion 110 a semi-trapezoidal appearance in directions along a buccal-lingual axis. In other embodiments, the lines of compound contour 116, 117 can extend substantially parallel to the lateral axis 121, such that offset angle A is between 0-5 degrees. The offset angle A may be the same or different between lines of compound curvature 116, 117.

The lines of compound curvature 116, 117 are spaced from each other at the occlusal edge 120 and the gingival edge 122 of the base 102, such that portion of the mesial wing 112 underlies a portion of the body 130. The central portion 110 may, in some embodiments, include a buccal indent 119, which may be received at least partially within a mesiobuccal developmental groove when the appliance 100 is seated on a first molar. Unlike the typical size of wings 112, 113, the buccal indent 119 does not extend the full occlusal-gingival width of the base 102. The buccal indent 119 approximates the appearance of the buccal surface of the first molar near buccal cusps, enhancing a practitioner's ability to correctly position the appliance 100 relative to the tooth surface.

The additional curvature provided by the mesial and distal wings 112, 113 provides for a reduced gap between the tooth facing surface 104 and the molar tooth enamel, as the compound, mesial-distal curvature more closely approximates the buccal surface contour of a molar tooth. However, in certain instances (such as in appliances intended for anterior teeth), the base may be curved along only one direction or alternatively have a flat configuration.

The molar appliance 100 may be pre-adjusted for torque and angulation. Tooth angulation can be defined according to the teachings of Dr. Lawrence F. Andrews as the mesiodistal cant of the facial axis of the clinical crown ("FACC") relative to a line perpendicular to the occlusal plane (see, e.g., Straight Wire, The Concept and Appliance, by Lawrence F. Andrews, (L. A. Wells Co., (C)1989)). Bracket angulation may be defined as the particular angular orientation of the archwire slot of the bracket relative to the base of the bracket in order to provide tooth angulation. Tooth torque may be defined as the buccolabial-lingual cant of the FACC when measured from a line perpendicular to the occlusal plane. Consequently, bracket torque may be defined as the orientation of the archwire slot relative to the base of the bracket such that the desired tooth torque is attained. Bracket torque is typically provided via a specified angle of the archwire slot or passage, i.e., "torque in the slot", or an angle is formed in the tooth mounting surface of a bracket, i.e., "torque in the base". Under either configuration, the appliance 100 can be provided with a certain torque that is designated by the letter "B" in Figure 9. The torque, or angle B, is equivalent to the angle between a reference plane 175 containing the lingual wall of an archwire passage 150 and a reference line 177. The reference line 177 extends in an occlusal-gingival direction and tangent to the base surface 104 at a point that is located in a lingual direction beneath the mesial-distal center and occlusal-gingival center of the archwire passage 150. Reference line 177 accordingly lies within a torque plane of the appliance 100.

Table I sets out exemplary torque and angulation values for the appliances according to the present disclosure. Optionally, any or all of the torque and/or angulation values in Table I may vary from the following values by plus or minus about 2 degrees, and more preferably by plus or minus about 1 degree.

**TABLE I**

| Appliance Type | Torque | Angulation |
|---|---|---|
| Central Incisor | 17 | 4 |
| Lateral Incisor | 10 | 8 |
| Cuspid | -7 | 8 |
| First Bicuspid | -7 | 0 |
| Second Bicuspid | -7 | 0 |
| First Molar | -20 | 0 |

Turning again to the body 130 depicted in Figures 3-9, the body 130 includes an occlusal side 131, a buccal side 133 and a gingival side 135 that define the exterior. A lingual edge of the occlusal side 131 and a lingual edge of the gingival side 135 are integrally connected to the buccal surface 106 of the base 102. Of course, depending upon the orientation of the appliance 100 in the patient's mouth, the gingival side 134 and occlusal side 131 may be reversed.

In end view, and as shown in Figs. 4 and 5, the sides 131, 133, 135 together present a generally "U"-shaped configuration. When considered in cooperation with the buccal surface 106 of the base 102, the sides 131, 133, 135 present a semi-trapezoidal configuration. The body 130 may include curved or rounded exterior surfaces joining one or both of the occlusal side 131 and gingival side 135 to the buccal side 133 in order to reduce irritation of adjacent tissue (e.g., the patient's cheeks) in the oral cavity. The rounded exterior surfaces preferably extend substantially the entire mesial-distal length of the body 130, and can be a variety of radius sizes depending on the overall size of the body 130. The mesial and distal end regions of the sides 131, 133, 135 may also include curved surfaces in order to reduce irritation of adjacent tissue.

The buccal side 133 includes a substantially planar surface 134, which can, in certain implementations of the present disclosure, reside in a reference plane ("P" in Figures 4 and 5) that is parallel to the torque plane of the appliance. A practitioner will typically provide pressure to a buccal surface of a molar appliance via a hand instrument during application of the molar appliance to a tooth surface. Depending on the orientation of the base and the appliance body, this pressure may create a moment of force about the central, longitudinal axis of the appliance, causing the appliance to tip or rotate relative to the tooth surface. Providing a buccal surface 134 that is parallel or substantially parallel to the torque plane helps to prevent or reduce undue rotation or tipping of the appliance 100; ensuring the bracket is seated in the prescribed or otherwise desired location.

The occlusal side 131 may include one or more canted, planar surfaces 132 extending towards the buccal side 133 at an oblique angle relative to the buccal surface 106 of the base 102. The gingival side 135 may also include substantially planar surfaces 136 extending from the buccal surface 106 of the base 102. The substantially planar surfaces 136 are typically not parallel to the canted surfaces 132 of the occlusal side 131. In some embodiments, the gingival planar surfaces 136 are substantially perpendicular to the torque plane of the bracket.

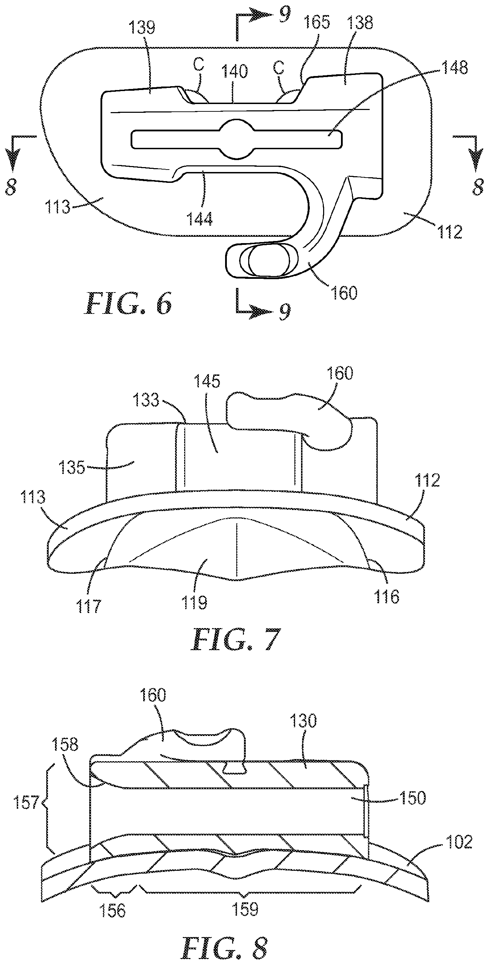

The occlusal-gingival thickness of the mesial section 138 of the body 130 at the base 102 is greater than the occlusal-givingal thickness of the distal section 139, giving the body 130 a tapered appearance when viewed from the orientation in Figure 6.

In the depicted implementations, the body 130 also includes a pair of opposing recesses 140, 144 that extend along a portion of the occlusal side 131 and the gingival side 135, respectively. Each recess 140, 144 can be configured so that one side thereof is open to one side of the body 130, and so that left and right sides 165 thereof are inclined at an angle "C" so as to have a trapezoidal cross section when viewed from the buccal direction (See Figure 6). The opposing recesses 140, 144 facilitate gripping of the appliance by a hand instrument such as fine-tipped pliers, tweezers or other tools used by the practitioner to grasp the body 130 during use. The occlusal recess 140 includes a recessed surface 141 that is located between canted surfaces 132. The recessed surface extends, at least in this embodiment, between the buccal surface 134 and the base 102 in an orientation that is not parallel to the canted surfaces 132. The gingival recesses 144 may also include a recessed surface 145. In the depicted embodiment, both of the recessed surfaces 141, 145 extend along a plane that is substantially perpendicular to the torque plane of appliance 100. Orienting either or both of the recessed surfaces 141, 145 at a substantially perpendicular orientation relative to the torque plane helps to prevent the tube from disengaging from a grasping hand instrument as the tube is pressed onto the tooth during bonding.

Optionally, one or both of recesses 140, 144 are provided with placement enhancement structure such as protrusions (including pins, posts, ridges and the like) or apertures (including pores or cavities). As an additional option, the placement enhancement structure may comprise a roughened surface, a knurled surface, or a surface that is provided with other types of patterns and/or cross-hatchings. Optionally, the placement enhancement structure may comprise any combination of the foregoing.

The placement enhancement structure further facilitates gripping of the appliance by a hand instrument such as fine-tipped pliers or other tools used by the practitioner to grasp the body 130 and helps ensure that the appliance 100 will not unduly shift relative to the hand instrument when the practitioner is maneuvering the appliance 100 in the oral cavity and placing the appliance 100 on the tooth surface. Additional options and aspects of the placement enhancement structure are described in US Patent No. 6,893,257 (Kelly).

As an additional option, the body 130 may include a positioning channel 148 in the buccal surface 134. The channel 148 can be used during a bonding procedure for shifting the appliance 100 to a precise location. For example, once the base 102 of the appliance 100 has been placed on the tooth via a bonding adhesive, the practitioner may elect to place the tip of a probe in the channel 148 and shift the appliance 10 slightly until a desired position is attained.

Referring now to Figures 4-6, an elongated archwire passage 150 extends across and through the body 130 in a generally mesial-distal direction. The archwire slot 150 includes a mesial section 156 and a distal section 159, with the distal section 159 generally extending a greater length of the passage 150 relative to the mesial section 156. The archwire slot is defined by an occlusal wall 151, a gingival wall 152, a buccolabial wall 153, as well as a tooth-facing or lingual wall 154.

The mesial section 156 features tapered, convex portions 158 of the walls 151, 152, 153, 154 to present a funneled entry. The mesial section 156 includes at least two, in some embodiments at least three, and in the depicted embodiment four convex wall portions 158. As can be appreciated by reference to the cross-section depicted in Figure 8, the convex wall portions 158 provide a taper having at least one section of continuous curvature such that the interior of the passage 150 lacks or minimizes a deliberate demarcation between mesial section 156 and the distal section 159. In this way, the initial entrance to the archwire slot 150 is wider, allowing for easier threading of the archwire (not shown) through the archwire passage 150. By eliminating or minimizing the transition between mesial and distal wall sections of the slot, any binding friction or potentially impeding stop surfaces between the archwire and the passage 150 are reduced, thereby facilitating prompt insertion of the archwire.

The depicted mesial section 156 includes convex wall portions 158 providing a continuously curved taper between the mesial passage entrance 157 and the distal section 159 of the passage 150. In other alternative implementations, one or more of the convex wall portions 158 may include a flat, planar land located between curved sections or at the mesial entrance. In other embodiments, the convex wall portions 158 can include a compound curvature, much like the base 102. In such embodiments, a first radius of curvature at and adjacent the mesial entrance 157 is typically greater than a second radius of curvature more adjacent the distal section 159. In implementations with compound curvature, the convex wall portion 158 may present a continuously curved taper or may include one or more flat land areas.

The curved surface 158 of the gingival wall 152 typically includes the largest surface area and radius (or radii) of curvature. In one exemplary implementation, curved surface 158 includes different curvature at the buccal edge and the lingual edge of the gingival wall 152. For example, the buccal edge of the gingival wall 152 can include a compound contour having a first radius near the mesial entrance 157 of 3.30 mm (0.13 inches) and a second radius adjacent the distal section 159 of 0.51 mm (0.02 inches). The lingual edge of the gingival wall 152 can include a compound contour having a first radius near the mesial entrance 157 of 10.2 mm (0.4 inches) and a second radius adjacent the distal section 159 of 0.76 mm (0.03 inches). Those skilled in the art will appreciate that other dimensions and relationships between the convex wall portions are possible and can be tailored to a desired mesial-distal length and buccal height of the passage 150.

The archwire passage 150 also includes a distal section 159 that has a generally rectangular configuration in cross-section as shown for example in Fig. 5. The distal section 159 extends from the distal side of the mesial section 156 of the passage 150 to the distal end of the walls 151, 152, 153, and 154. The archwire passage 150 has a rectangular shape when viewed in a longitudinally transverse reference plane (See Fig. 5) although circular, square, ovular, and other suitable shapes are also possible. It should likewise be appreciated that the buccal tube of the present invention may be used for archwires having any useful cross-sectional dimensions. In the distal section 159, the lingual wall 154 is flat and extends in a reference plane that is parallel to the buccal labial wall 153. Similarly, the gingival wall 152 extends in a reference plane that is parallel to the occlusal wall 151. In the depicted embodiment, no wall 151, 152, 153, 154 is parallel or substantially parallel to the gingival surface 135 or the buccal surface 133. This configuration of the archwire passage 150 ensures that no wall is parallel or substantially parallel to the torque plane of the appliance.

The appliance 100 may optionally include a hook 160 for connection to another orthodontic device. Examples of suitable devices include coil springs and elastomeric force modules that are connected to other appliances in the patient's oral cavity. Optionally, such devices have an end section with a hole or opening that receives at least a distal portion 162 of the hook, although other types of connections are also possible. The hook 160 in this embodiment has an overall curved configuration that extends from the gingival side 135 of the body 130. The curved longitudinal axis of the hook 160 extends away from the body 130 first in a gingival direction, and then in a distal direction. At least the gingivally extending hook portion 161 resides in and is coplanar with the plane P of the planar buccal surface portion 134. The coplanar relationship of the hook 160 and buccal surface 134 reduces the profile of the appliance 100 near the patient's adjacent gingival and cheek tissue, enhancing the relative comfort of the appliance 100 when installed. In other embodiments (not shown), the gingivally extending portion 161 may project towards the base 102, further reducing the buccal-lingual profile of the appliance 100. All of the surfaces of the hook 160 can be smoothly rounded to avoid irritating soft tissue in the oral cavity.

The appliance 100 as illustrated in the accompanying drawings is adapted to be adhesively connected directly to the surface of a molar tooth. However, other options for coupling the appliance 10 to the surface of the tooth are also contemplated. For example, the appliance 100 could be fixed to an orthodontic band that is adapted to encircle the patient's molar tooth. Suitable orthodontic bands include stainless steel bands, such as Victory Series brand bands and Unitek brand bands from 3M Unitek Corporation.

The molar appliances according to the present disclosure, including the appliances described in detail above, maybe made of any material that is suitable for use in the oral cavity and has sufficient strength to resist the stresses normally encountered during the course of orthodontic treatment. Suitable materials include, for example, metallic materials (such as stainless steel), ceramic materials (such as monocrystalline or polycrystalline alumina), and plastic materials (such as fiber-reinforced polycarbonate). In certain presently preferred circumstances, the appliance 100 is integrally made as a unitary component by a metal injection molding or additive manufacturing process. As an alternative, however, body 130 (with or without auxiliaries) may be manufactured separately and then connected directly to the base 102 by weld or brazening operation.

Components of the appliance 100 may be manufactured according to any number of methods known to the skilled artisan. These methods include, but are not limited to, milling, investment casting, metal injection molding, and additive manufacturing. If desired, one or more of the base 102, body 130, and auxiliary attachment can also be manufactured from other classes of materials, such as ceramics, polymers, or composites. If polymeric components are used, these may optionally be formed by milling, injection molding, extrusion or additive manufacturing. Examples of suitable additive manufacturing processes include solid freeform fabrication such as 3D printing processes, stereolithography methods, fused deposition modeling, laminated object manufacturing, laser engineered net shaping, selective laser sintering, shape deposition manufacturing, selective laser melting , and solid ground curing.. An example of a suitable 3D printing machine is the Eden brand 500V printer from Objet Geometries Ltd., using FullCure 720 acrylic-based photopolymer printing material (also available from Objet Geometries Ltd.).

In some embodiments, the base 102 may be independently designed using CAD/CAM software. Digital data can be used to, for example, design and modify the base of the appliance to a shape that comprises an approximate contour of at least a portion of the target (i.e., intended bonding location) tooth surface. For example, data could be gathered from a number of individuals regarding the buccal surface contour of the first and second molar teeth, including for example, the height of a tooth in an occlusal-gingival direction and the width of a tooth in a mesial-distal direction. Next, a number of compound contours could be developed using statistical analysis in order to determine the optimal configuration of the outer surface 104 of the base 102. Alternatively, the outer surface 102 can be a negative replica of a patient's tooth prepared using digital data obtained with, for example, an intra-oral or extra-oral scan of the patient's dental arch or a model thereof.

The appliance 100 as exemplified in the drawings is a molar or buccal tube appliance that is especially adapted for use with molar teeth. However, the principles of the present disclosure may be used with other orthodontic appliances as well. For example, orthodontic brackets adapted for bonding to anterior, cuspid, bicuspid, and premolar teeth may also include a mesial wing bent about a line of compound curvature.

Various modifications and alterations to this invention will become apparent to those skilled in the art without departing from the scope of this invention. It should be understood that this invention is not intended to be unduly limited by the illustrative embodiments and examples set forth herein and that such examples and embodiments are presented by way of example only with the scope of the invention intended to be limited only by the claims set forth herein as follows.

## Claims

1. An orthodontic appliance (100) comprising:
a base (102) having a tooth facing surface (104) for bonding to tooth structure,
a body (130) having a mesial section (138) and a distal section (139), the body (130) extending outwardly from the base (102), the body (130) including a facial wall (153), a lingual wall (154), an occlusal wall (151) and a gingival wall (152), the walls defining a passage (150) extending in a mesial-distal direction for receipt of a wire, the passage (150) including a mesial section (156) and a distal section (159),
wherein the mesial section (156) includes an entrance (157) and wherein the occlusal-gingival thickness of the mesial section (138) of the body (130) at the base (102) is greater than the occlusal-gingival thickness of the distal section (139) of the body (130) at the base (102), **characterized in that** the mesial section (156) includes at least two convex wall portions (158) tapering from the entrance (157) towards the distal section (159), wherein the convex wall portions (158) include a section having a continuous curvature.

2. The orthodontic appliance (100) of claim 1, wherein the mesial section (156) includes three convex wall portions (158).

3. The orthodontic appliance (100) of claim 2, wherein the occlusal wall (151), gingival wall (152), and facial wall (153) each include a convex wall portion (158).

4. The orthodontic appliance (100) of claim 3, and further comprising a convex wall portion (158) on the lingual wall (154).

5. The orthodontic appliance (100) of claim 1, wherein the base (102) includes a central portion (110) underlying the body (130) and a least one wing (112, 113) spaced in a mesial or distal direction from the central portion (110) and rotated relative to the central portion (110), wherein the central portion (110) includes a first radius of curvature and the wing (112, 113) includes a second radius of curvature different from the first radius such that the base (102) exhibits a compound, mesial, distal curvature when viewed along a generally occlusal-gingival axis.

6. The orthodontic appliance (100) of claim 5, and including a mesial wing (112) and a distal wing (113), wherein the mesial wing (112) and the distal wing (113) each include the second radius of curvature.

7. The orthodontic appliance (100) of claim 5, wherein the wing (112, 113) is rotated relative to the central portion (110) at a line of compound curvature (116, 117), wherein the line (116, 117) extends across the base (102) in a generally occlusal-gingival direction, and wherein the base (102) includes a mesial-distal length and an occlusal-gingival width, and wherein the line of compound curvature (116, 117) extends across the entire occlusal-gingival width of the base (102).

## Patentansprüche

1. Kieferorthopädische Vorrichtung (100), aufweisend:
eine Basis (102) mit einer zum Zahn gewandten Oberfläche (104) zum Binden an die Zahnstruktur,
einen Körper (130) mit einem mesialen Abschnitt (138) und einem distalen Abschnitt (139), wobei der Körper (130) von der Basis (102) nach außen verläuft, wobei der Körper (130) eine faziale Wand (153), eine linguale Wand (154), eine okklusale Wand (151) und eine gingivale Wand (152) aufweist, wobei die Wände einen Durchgang (150) definieren, der in einer mesial-distalen Richtung verläuft, um einen Draht aufzunehmen, wobei der Durchgang (150) einen mesialen Abschnitt (156) und einen distalen Abschnitt (159) aufweist,
wobei der mesiale Abschnitt (156) einen Eingang (157) aufweist und wobei die okklusal-gingivale Dicke des mesialen Abschnitts (138) des Körpers (130) an der Basis (102) größer als die okklusal-gingivale Dicke des distalen Abschnitts (139) des Körpers (130) an der Basis (102) ist, **dadurch gekennzeichnet, dass** der mesiale Abschnitt (156) mindestens zwei konvexe Wandabschnitte (158) einschließt, die sich vom Eingang (157) zum distalen Abschnitt (159) verjüngen, wobei die konvexen Wandabschnitte (158) einen Abschnitt mit einer kontinuierlichen Krümmung einschließen.

2. Kieferorthopädische Vorrichtung (100) nach Anspruch 1, wobei der mesiale Abschnitt (156) drei konvexe Wandabschnitte (158) aufweist.

3. Kieferorthopädische Vorrichtung (100) nach Anspruch 2, wobei die okklusale Wand (151), die gingivale Wand (152) und die faziale Wand (153) jeweils einen konvexen Wandabschnitt (158) aufweisen.

4. Kieferorthopädische Vorrichtung (100) nach Anspruch 3 und ferner aufweisend einen konvexen Wandabschnitt (158) an der lingualen Wand (154).

5. Kieferorthopädische Vorrichtung (100) nach Anspruch 1, wobei die Basis (102) einen Mittelabschnitt (110) aufweist, der unter dem Körper (130) liegt und mindestens einen Flügel (112, 113) aufweist, der in einer mesialen oder distalen Richtung vom Mittelabschnitt (110) beabstandet ist und relativ zu dem Mittelabschnitt (110) gedreht wird, wobei der Mittelabschnitt (110) einen ersten Krümmungsradius aufweist und der Flügel (112, 113) einen zweiten Krümmungsradius aufweist, der sich von dem ersten Radius unterscheidet, so dass die Basis (102) bei Betrachtung entlang einer im Allgemeinen okklusal-gingivalen Achse eine zusammengesetzte, mesiale, distale Krümmung aufweist.

6. Kieferorthopädische Vorrichtung (100) nach Anspruch 5, und aufweisend einen mesialen Flügel (112) und einen distalen Flügel (113), wobei der mesiale Flügel (112) und der distale Flügel (113) jeweils den zweiten Krümmungsradius aufweisen.

7. Kieferorthopädische Vorrichtung (100) nach Anspruch 5, wobei der Flügel (112, 113) relativ zu dem Mittelabschnitt (110) an einer zusammengesetzten Krümmung (116, 117) gedreht wird, wobei die Linie (116, 117) über die Basis (102) in einer im Allgemeinen okklusal-gingivalen Richtung verläuft, und wobei die Basis (102) eine mesial-distale Länge und eine okklusal-gingivale Breite aufweist, und wobei die Linie der zusammengesetzten Krümmung (116, 117) über die gesamte okklusal-gingivale Breite der Basis (102) verläuft.

## Revendications

1. Appareil orthodontique (100) comprenant :
une base (102) ayant une surface faisant face à une dent (104) pour la liaison à la structure de dent,
un corps (130) ayant une section mésiale (138) et une section distale (139), le corps (130) s'étendant vers l'extérieur à partir de la base (102), le corps (130) incluant une paroi faciale (153), une paroi linguale (154), une paroi occlusale (151) et une paroi gingivale (152), les parois définissant un passage (150) s'étendant dans une direction mésio-distale pour la réception d'un fil, le passage (150) incluant une section mésiale (156) et une section distale (159),
dans lequel la section mésiale (156) inclut une entrée (157) et dans lequel l'épaisseur occluso-gingivale de la section mésiale (138) du corps (130) au niveau de la base (102) est supérieure à l'épaisseur occluso-gingivale de la section distale (139) du corps (130) au niveau de la base (102), **caractérisé en ce que** la section mésiale (156) inclut au moins deux parties de paroi convexes (158) s'effilant de l'entrée (157) vers la section distale (159), dans lequel les parties de paroi convexes (158) incluent une section ayant une courbure continue.

2. Appareil orthodontique (100) selon la revendication 1, dans lequel la section mésiale (156) inclut trois parties de paroi convexes (158).

3. Appareil orthodontique (100) selon la revendication 2, dans lequel la paroi occlusale (151), la paroi gingivale (152), et la paroi faciale (153) incluent chacune une partie de paroi convexe (158).

4. Appareil orthodontique (100) selon la revendication 3, et comprenant en outre une partie de paroi convexe (158) sur la paroi linguale (154).

5. Appareil orthodontique (100) selon la revendication 1, dans lequel la base (102) inclut une partie centrale (110) sous-jacente au corps (130) et au moins une aile (112, 113) espacée dans une direction mésiale ou distale de la partie centrale (110) et tournée par rapport à la partie centrale (110), dans lequel la partie centrale (110) inclut un premier rayon de courbure et l'aile (112, 113) inclut un deuxième rayon de courbure différent du premier rayon de telle sorte que la base (102) présente une courbure mésiale, distale, composée, lorsqu'elle est visualisée le long d'un axe généralement occluso-gingival.

6. Appareil orthodontique (100) selon la revendication 5, et incluant une aile mésiale (112) et une aile distale (113), dans lequel l'aile mésiale (112) et l'aile distale (113) incluent chacune le deuxième rayon de courbure.

7. Appareil orthodontique (100) selon la revendication 5, dans lequel l'aile (112, 113) est tournée par rapport à la partie centrale (110) au niveau d'une ligne de courbure composée (116, 117), dans lequel la ligne (116, 117) s'étend sur toute la base (102) dans une direction généralement occluso-gingivale, et dans lequel la base (102) inclut une longueur mésio-distale et une largeur occluso-gingivale, et dans lequel la ligne de courbure composée (116, 117) s'étend sur toute la largeur occluso-gingivale de la base (102).
